# EUROPEAN PATENT SPECIFICATION

(11) **EP 3 580 453 B1**
(45) Date of publication and mention of the grant of the patent: **27.07.2022**
(21) Application number: 18705079.4
(22) Date of filing: 07.02.2018
(51) Int. Cl.: F03D 7/02

(54) **METHOD AND SYSTEM FOR CONTROLLING A WIND TURBINE**
VERFAHREN UND SYSTEM ZUM STEUERN EINER WINDTURBINE
PROCÉDÉ ET SYSTÈME DE COMMANDE D'UNE ÉOLIENNE

(30) Priority: 09.02.2017 US 201762456719 P; 23.02.2017 DK PA201770137
(43) Date of publication of application: 18.12.2019
(73) Proprietor: Vestas Wind Systems A/S, 8200 Aarhus N (DK)
(72) Inventor: GUPTA, Anurag, Manvel Texas 77578 (US)
(74) Representative: Vestas Patents Department
(86) International application number: PCT/DK2018/050029
(87) International publication number: WO 2018/145715

(56) References cited:
- EP-A1- 3 029 317
- US-A1- 2009 284 016
- US-A1- 2015 030 448

## Description

### Technical Field

The present invention relates to a method and system for controlling a wind turbine. In particular, the present invention relates to a method and a system for controlling a wind turbine such that negative stall at an outboard region of a wind turbine blade is prevented from occurring.

### Background

In operation, wind turbine blades experience aerodynamic lift due to the on-coming wind. This lift causes a wind turbine hub, to which the wind turbine blades are attached at their inboard ends, to rotate. The blades and the hub together form a rotor. The hub is coupled to a gearbox and generator in order to convert the rotational motion into electrical energy.

It is sometimes necessary to reduce the speed at which the wind turbine rotor is rotating. For example, it may be determined that an excessive rotational speed may damage the wind turbine. Alternatively, if the demand for electricity is low, it may be desirable to reduce the rotational speed of the wind turbine rotor to reduce the wear of components.

Several methods and systems for controlling wind turbines, and in particular, for reducing the rotational speed of wind turbines rotors have been proposed. Many of these methods involve one or more of; reducing the lift generated by the wind turbine blades, and increasing the aerodynamic drag experienced by the wind turbine blades. One such method involves varying the pitch angle of the wind turbine blades. Wind turbine blades typically have an optimal angle of attack at which they experience maximum aerodynamic lift. If the angle of attack of the wind turbine blade is reduced, the aerodynamic lift generated by the wind turbine blade is also reduced which in turn can reduce the rotational speed of the rotor. The angle of attack of the wind turbine blade can be reduced by increasing the pitch angle of the wind turbine blade. This is known as 'feathering' the wind turbine blade.

The profile of a modern wind turbine blade is often twisted such that the outboard region of the wind turbine blade is pitched further out of the on-coming wind than the inboard region of the wind turbine blade. This is to account for the fact that, in operation, the outboard region of the wind turbine blade moves faster than the inboard region of the wind turbine blade. In normal operation, such a twist increases the efficiency of the wind turbine blade. Because of this twist, when the pitch angle of a wind turbine blade of this type is increased (i.e. the pitch angle is increased toward feather), it is possible that the outboard region has a negative angle of attack while the inboard and mid-board regions of the wind turbine blade have positive angles of attack.

Pitching the wind turbine blade such that the outboard region of the wind turbine blade has a negative angle of attack is problematic since this can lead to negative stall at the outboard region of the wind turbine blade. Negative stall occurs in wind turbine blades when the airflow separation occurs on the pressure side of the turbine blade. The point at which negative stall occurs depends on the shape and profile of the wind turbine blade but it is typically at negative angles of attack. The flow separation on the pressure side of the wind turbine blade causes large reductions in lift generated by the blade and also increases drag. Negative stall may also lead to stability problems which include edgewise vibrations. This can increase the load on the blade. The vibrations can also lead to undesirable noise which is problematic, particularly where the wind turbine is located in or near populated areas.

Due to the shape of wind turbine blades, negative stall will typically occur initially at the outboard region of a wind turbine blade, see for instance US 2009/284016 A1 or EP 3 029 317 A1. As the pitch angle of the wind turbine blade is increased further, negative stall will occur at a progressively greater proportion of the wind turbine blade, spreading from the outboard end towards the inboard end.

It would therefore be desirable to provide a method for reducing or eliminating negative stall at the outboard regions of wind turbine blades. It would further be desirable to provide a method for controlling wind turbines, in particular a method for reducing the rotational speed of a rotor without causing negative stall at the outboard region of wind turbine blades.

It would also be desirable to extend the range of wind speeds at which the wind turbine is able to operate. In particular it would be desirable to increase the cut-out wind speed to enable power generation in higher winds.

### Statement of Invention

According to a first aspect of the present invention, there is provided a method for controlling a wind turbine, the wind turbine comprising a wind turbine blade. The method comprises: measuring one or more wind turbine parameters; determining, based on the one or more wind turbine parameters, whether negative stall will occur at an outboard region of the wind turbine blade; generating a first signal if it is determined negative stall will occur at the outboard region of the wind turbine blade; and activating a lift disrupting device for disrupting airflow over the suction side of the wind turbine blade in response to the generated first signal such that the lift generated by the wind turbine blade is reduced. The lift disrupting device for disrupting airflow over the suction side of the wind turbine blade is disposed at the mid-board region of the wind turbine blade.

Negative stall occurs when airflow separates from a pressure side of a wind turbine blade (and the airflow stays attached to the suction side of the blade) because the aerodynamic angle of attack that a section of the blade experiences has become too low. It is important to note that negative stall is different to the conventional stalling of a blade, where airflow separates from the suction side of a blade due to a high positive angle of attack.

By reducing the lift generated by the wind turbine blade at the mid-board region of the wind turbine blade, negative stall can be advantageously prevented at the outboard region of the wind turbine blade. This is because, reducing lift at the mid-board region of the wind turbine blade will reduce the rotational speed of the wind turbine rotor and reduce loads acting on the turbine and so the blade does not have to be pitched further toward feather.

Furthermore, this method allows the wind turbine to be operated in higher wind speeds. Since the lift disrupting device for disrupting airflow over the suction side of the wind turbine blade prevents negative stall occurring at the outboard region of the wind turbine at higher wind speeds. This allows the wind turbine to have a higher cut-out wind speed which advantageously allows the wind turbine to operate and generate power in a greater variety of conditions which makes the wind turbine more efficient.

The lift disrupting device for disrupting airflow over the suction side of the wind turbine blade is disposed at the mid-board region of the wind turbine blade for several reasons. Firstly, if the outboard region of the wind turbine blade is approaching negative stall, then that region of the wind turbine blade will be experiencing very little aerodynamic lift, if any. Therefore, providing a lift disrupting device for disrupting airflow over the suction side of the wind turbine blade at the outboard region of the wind turbine blade would not reduce the lift generated by the blade. Locating the lift disrupting device for disrupting airflow over the suction side of the wind turbine blade at the mid-board region of the wind turbine blade advantageously allows lift to be reduced at a location which, in situations where the lift disrupting device will be activated, will still be generating lift. Furthermore, locating the lift disrupting device for disrupting airflow over the suction side of the wind turbine blade at the inboard region of the wind turbine blade would be less effective since lift generated at the inboard region produces less of a turning moment on the wind turbine compared to lift generated at the mid-board region of the wind turbine blade.

As used herein, the term 'angle of attack' is used to describe the angle between the chord of the wind turbine blade and the apparent (or resultant) wind direction. The angle of attack is therefore dependent on the pitch angle of the wind turbine blade and the apparent wind direction. The apparent wind direction is the vector sum of the axial free stream velocity and the tangential speed of the blade at a particular radius. Assuming other parameters remain constant, if the rotational speed of the turbine blade decreases, the angle of attack of the turbine blade increases. A blade section with an angle of attack of zero has its chord aligned with the apparent wind direction. A blade section with a positive angle of attack is inclined to expose its pressure side to the on-coming wind. A turbine blade with a negative angle of attack is inclined to expose its suction side to the on-coming wind.

As used herein, the term 'chord' refers to a straight line joining the leading edge and the trailing edge of the wind turbine blade.

As used herein, the terms 'inboard region' and 'outboard region' refer to opposing ends of the wind turbine blade, the inboard region being attached to the rest of the wind turbine. The inboard region of the wind turbine blade is the region of the wind turbine blade that extends from a root end along approximately 20 percent of the length of the wind turbine blade. The outboard region of the wind turbine blade is the region of the wind turbine blade that extends from a tip end along approximately 20 percent of the length of the wind turbine blade. The mid-board region of the wind turbine blade is disposed between the inboard region and the outboard region of the wind turbine blade.

In some embodiments of the present invention, the wind turbine blade is a variable pitch wind turbine blade and the one or more wind turbine parameters include the pitch angle of the wind turbine blade.

Variable pitch wind turbine blades are advantageous since they allow the lift generated by the wind turbine blades to be controlled, which in turn can affect the load on the wind turbine blades and the rotational speed of the wind turbine.

In some embodiments of the present invention, the method further comprises reducing the lift generated by the wind turbine blade by increasing the pitch angle of the wind turbine blade towards feather. The pitch angle of the wind turbine blade is not increased to such an extent that negative stall occurs at the outboard region of the wind turbine blade.

The use of the method for controlling a wind turbine of the present invention in combination with a wind turbine comprising variable pitch wind turbine blades is particularly advantageous since it ultimately increases the "cut-out" wind speed for the wind turbine. Both feathering the wind turbine blades and activating the lift disrupting device for disrupting airflow over the suction side of the wind turbine blade reduces the lift generated by the wind turbine blade. These two features may be used in combination to allow the wind turbine to operate in higher wind speeds.

Optionally, in wind turbines comprising variable pitch wind turbine blades according to the invention, the lift generated by the wind turbine blades is initially controlled by feathering the wind turbine blades. In doing so, negative stall is also avoided at the outboard region of the wind turbine blade. However, there will come a point at which any further change in the pitch angle of the wind turbine blade will cause negative stall at the outboard region of the wind turbine blade. If it is determined that based on the one or more wind turbine parameters, any further change in the pitch angle of the wind turbine blade will cause negative stall to occur at the outboard region of the wind turbine blade, then the pitch angle is increased no further. In addition, if it is determined that negative stall will still occur at the outboard region of the wind turbine blade, then the lift disrupting device for disrupting airflow over the suction side of the wind turbine blade is activated, thereby advantageously further reducing the lift generated by the wind turbine blade and preventing negative stall from occurring at the outboard region of the wind turbine blade.

Alternatively, the pitch angle of the wind turbine blade may be increased and the lift disrupting device for disrupting airflow over the suction side of the wind turbine blade may be activated substantially simultaneously. This may be done is such a way that the lift generated by the wind turbine blade is reduced without causing negative stall to occur at the outboard region of the wind turbine blade.

In some embodiments of the present invention, the one or more wind turbine parameters include at least one of: on-coming wind speed, on-coming wind direction, turbine torque, turbine thrust, power output, frequency of rotation, stress at the outboard region of the wind turbine blade, strain at the outboard region of the blade and air pressure on either the pressure or the suction side of the blade at the outboard region of the blade.

There are several ways in which it may be determined if negative stall will occur at the outboard region of the wind turbine blade. As discussed further below, parameters such as the on-coming wind speed, on-coming wind direction, turbine torque, turbine thrust, power output and frequency of rotation along with the pitch angle of the wind turbine blade may be used to calculate the angle of attack of the wind turbine blade which in turn can be used to determine if negative stall will occur at the outboard region of the wind turbine blade. Alternatively, it may be determined if negative stall will occur, or is already occurring, by directly measuring parameters at the outboard region of the wind turbine blade. It is known that negative stall leads to turbulence and vibrations which can result in increased load on the wind turbine blades at the outboard region. Therefore, the parameters may include the stress or strain at the outboard region of the turbine blade. Alternately, since during negative stall, separated airflow occurs across the pressure side of the wind turbine blade, the air pressure on the pressure side of the wind turbine blade is reduced in the outboard region. This is partially responsible for the lack of lift generated by wind turbine blades in which negative stall is occurring. A drop in air pressure on the pressure side of the wind turbine may therefore be used to determine that negative stall will occur or is already occurring.

Some of the wind turbine parameters are parameters which are already measured for other technical reasons. These may include the on-coming wind speed, on-coming wind direction, turbine torque, turbine thrust, power output, frequency of rotation and the pitch angle of the wind turbine blade. Other wind turbine parameters are parameters which may require additional measurements beyond what is typically measured. For example, if the stress or the strain at the outboard region of the wind turbine blade are to be measured, then specific sensors may be used to measure such parameters. For example, an electrical resistance based strain gauge may be used to detect strain at the outboard region of the wind turbine blade. Alternatively, where the pressure reduction on the pressure side of the outboard region of the wind turbine blade is used to determine whether negative stall will occur, an air pressure gauge may be incorporated into the pressure side of the outboard region of the wind turbine blade.

In some embodiments of the present invention, determining whether negative stall will occur at the outboard region of the wind turbine blade involves comparing the one or more wind turbine parameters against a threshold value for that parameter beyond which negative stall at the outboard region of the blade is known to occur.

Where only one wind turbine parameter is used to determine if negative stall will occur at the outboard region of the wind turbine blade, then determining whether negative stall will occur at the outboard region of the wind turbine blade may simply involve comparing the measured wind turbine parameter against a threshold value for that parameter beyond which negative stall at the outboard region of the wind turbine blade is known to occur. If the wind turbine parameter is beyond this value, then it may be concluded that negative stall will occur at the outboard region of the wind turbine blade. This method may be appropriate if the wind turbine parameter being used is the stress or strain at the outboard region of the wind turbine blade or the air pressure on the pressure side of the wind turbine blade.

Where more than one wind turbine parameter is used to determine if negative stall will occur at the outboard region of the wind turbine blade, then determining whether negative stall will occur at the outboard region of the wind turbine blade may involve the use of a look-up table. For example, where two wind turbine parameters are used, the first wind turbine parameter may be plotted on one axis and a second wind turbine parameter may be plotted on a second perpendicular axis such that, for any two values of each of the two wind turbine parameters, the look-up table will state whether negative stall will occur at the outboard region of the wind turbine blade. The look-up table may include more than two wind turbine parameters. This method may be appropriate if the wind turbine parameters being used are the pitch angle of the wind turbine blade, the rotational speed of the wind turbine and the on-coming wind velocity. In this case, the rotational speed of the wind turbine and the on-coming wind velocity may first be used to calculate the velocity of the apparent wind. The look-up table may then plot pitch angle against apparent wind velocity. Alternatively, the look-up table may plot all three parameters on orthogonal axes.

Preferably, the step of comparing the one or more wind turbine parameters against a threshold value for that parameter is undertaken by a computer. The computer may be located within, or close to the wind turbine. The computer may be located in a different location to the wind turbine.

In some embodiments of the present invention, determining whether negative stall will occur at the outboard region of the wind turbine blade involves; calculating the angle of attack of the outboard region of the wind turbine blade based on the one or more wind turbine parameters, and comparing the calculated angle of attack of the outboard region of the wind turbine blade with a minimum threshold value angle of attack, below which negative stall is known to occur at the outboard region of the wind turbine blade.

As mentioned above, negative stall occurs in wind turbine blades once the angle of attack falls below a certain value. This value varies depending on the shape of the wind turbine blade but is typically where the angle of attack is negative. A convenient way to determine whether negative stall will occur at the outboard region of the wind turbine blade is therefore to calculate the angle of attack of the wind turbine blade at that outboard region.

The angle of attack of the outboard region of the wind turbine blade may be calculated based on the pitch angle of the wind turbine blade, the rotational speed of the wind turbine and the on-coming wind velocity. Once the angle of attack at the outboard region of the wind turbine blade is calculated, it may be compared to the minimum threshold value angle of attack, below which negative stall is known to occur at the outboard region of the wind turbine blade. If the calculated angle of attack falls below the minimum threshold angle of attack, then it is determined that negative stall will occur at the outboard region of the wind turbine blade and the first signal is generated.

In some embodiments of the present invention, determining whether negative stall will occur at the outboard region of the wind turbine blade involves inputting the one or more parameters into a real-time computer model of the wind turbine which can determine whether negative stall will occur.

The use of a computer model is advantageous since it is able to accurately determine if, and at what point, negative stall will occur in the outboard region of the wind turbine blade. This is because the computer model will be able to take into account a wider variety of wind turbine parameters so as to accurately model the conditions at the outboard region of the wind turbine blade. The computer model may comprise an aero -elastic model of the wind turbine.

In some embodiments of the present invention, the method further comprises: continuing to measure one or more wind turbine parameters once the lift disrupting device for disrupting airflow over the suction side of the wind turbine blade has been activated; and determining, based on the one or more wind turbine parameters, whether negative stall is occurring at the outboard region of the wind turbine blade. The method further comprises: generating a second signal if it is determined negative stall is occurring at the outboard region of the wind turbine blade, and increasing the extent to which the lift disrupting device for disrupting airflow, disrupts airflow over the suction side of the wind turbine blade in response to the generated second signal such that the lift generated by the blade is reduced.

In such embodiments of the invention, the lift disrupting device for disrupting airflow over the suction side of the wind turbine blade is not simply activated and deactivated but is able to increase the extent to which it disrupts airflow over the suction side of the wind turbine blade in response to a second signal.

This advantageously ensures that the lift disrupting device for disrupting airflow over the suction side of the wind turbine blade is effective in preventing negative stall occurring at the outboard region of the wind turbine blade in the form of a feed-back loop. Such a feed-back loop may be particularly advantageous where the conditions under which the wind turbine is operating change once the lift disrupting device for disrupting airflow over the suction side of the wind turbine blade has been activated. For example, if the on-coming wind speed increases then, despite the lift disrupting device for disrupting airflow over the suction side of the wind turbine blade being activated, negative stall may occur at the outboard region of the wind turbine blade. If this is detected, then the extent to which the lift disrupting device for disrupting airflow disrupts airflow over the suction side of the wind turbine blade is increased such that negative stall is prevented from occurring at the outboard region of the wind turbine blade.

The measured one or more wind turbine parameters may be the same one or more wind turbine parameters used to initially determine whether negative stall will occur at the outboard region of the wind turbine blade. Alternatively, the measured one or more wind turbine parameters may be different from the one or more wind turbine parameters used to initially determine whether negative stall will occur at the outboard region of the wind turbine blade. For example, the pitch angle, the rotational speed of the wind turbine, and the on-coming wind velocity may be used to determine whether negative stall will occur at the outboard region of the wind turbine blade, and the strain at the outboard region of the wind turbine blade may be used as part of a feed-back loop to determine if the lift disrupting device for disrupting airflow over the suction side of the wind turbine blade has in fact prevented negative stall occurring at the outboard region of the wind turbine blade.

If it is determined that, despite the activation of the lift disrupting device for disrupting airflow over the suction side of the wind turbine blade, negative stall is occurring at the out board region of the wind turbine blade, then the second signal is produced, and the extent to which the lift disrupting device for disrupting airflow disrupts airflow over the suction side of the wind turbine blade is increased.

In some embodiments of the present invention, the method further comprises: continuing to measure one or more wind turbine parameters once the lift disrupting device for disrupting airflow over the suction side of the wind turbine blade has been activated, determining, based on the one or more wind turbine parameters, whether negative stall will occur at the outboard region of the wind turbine blade, generating a third signal if it is determined negative stall will no longer occur at the outboard region of the wind turbine blade, and decreasing the extent to which the lift disrupting device disrupts airflow over the suction side of the wind turbine blade in response to the generated third signal such that negative stall does not occur at the outboard region of the wind turbine blade.

In such embodiments of the invention, the lift disrupting device for disrupting airflow over the suction side of the wind turbine blade is not simply activated and deactivated but is able to decrease the extent to which it disrupts airflow over the suction side of the wind turbine blade in response to a second signal.

This ensures that the lift disrupting device for disrupting airflow over the suction side of the wind turbine blade is not activated to an excessive extent but is only activated to an extent to which it prevents negative stall occurring at the outboard region of the wind turbine blade in the form of a feed-back loop. This prevents lift generated by the wind turbine blade being reduced to an extent beyond which is needed to prevent negative stall occurring at the outboard region of the wind turbine blade. This advantageously allows the wind turbine to operate efficiently without shedding excess lift. Additionally, this prevents the lift disrupting device for disrupting airflow over the suction side of the wind turbine blade being used excessively which may advantageously reduce wear of parts.

Such a feed-back loop may be particularly advantageous where the conditions under which the wind turbine is operating change once the lift disrupting device for disrupting airflow over the suction side of the wind turbine blade has been activated. For example, if the on-coming wind speed decreases once the lift disrupting device is activated, then it may be determined that negative stall will no longer occur at the outboard region of the wind turbine blade if the extent to which the lift disrupting device for disrupting airflow disrupts airflow over the suction side of the wind turbine blade is reduced. If this is determined, then the extent to which the lift disrupting device disrupts airflow over the suction side of the wind turbine blade is decreased to a level that still ensures that negative stall does not occur at the outboard region of the wind turbine blade.

The measured one or more wind turbine parameters may be the same one or more wind turbine parameters used to initially determine whether negative stall will occur at the outboard region of the wind turbine blade. Alternatively, the measured one or more wind turbine parameters may be different from the one or more wind turbine parameters used to initially determine whether negative stall will occur at the outboard region of the wind turbine blade.

In some embodiments of the present invention, the method further comprises deactivating the lift disrupting device for disrupting airflow over the suction side of the wind turbine blade if it is determined that, based on one or more wind turbine parameters, negative stall will no longer occur at the outboard region of the wind turbine blade if the lift disrupting device for disrupting airflow over the suction side of the wind turbine blade is deactivated.

The lift disrupting device for disrupting airflow over the suction side of the wind turbine blade is disposed at a mid-board region of the wind turbine blade.

In some embodiments of the present invention, the mid-board region is disposed from 20% to 80% along the length of the wind turbine blade from a root of the blade towards a tip of the blade. Preferably, the mid-board region is disposed from 30% to 70% along the length of the wind turbine blade from a root of the blade towards a tip of the blade.

The lift disrupting device for disrupting airflow over the suction side of the wind turbine blade may be any means for disrupting airflow. For example, the lift disrupting device for disrupting airflow may comprise retractable tabs, spoilers or flaps which project from the suction side of the wind turbine blade to disrupt airflow. The lift disrupting device for disrupting airflow may comprise inflatable portions designed to disrupt airflow. The lift disrupting device for disrupting airflow may comprise plasma actuators pointed forward to disrupt airflow.

In some embodiments of the present invention, the lift disrupting device for disrupting airflow over the suction side of the wind turbine comprises one or more slots located on the suction side at the mid-board region of the wind turbine blade. The one or more slots are configured to direct air towards the leading edge of the wind turbine blade. This slows the stream of air over the suction side of the wind turbine blade and thereby reduces the lift generated by the wind turbine blade.

The provision of slots advantageously allows a large part of the mid-board region of the wind turbine blade to be provided with a lift disrupting device for disrupting airflow over the suction side of the wind turbine blade without substantially weakening the structure of the wind turbine blade.

In some embodiments of the present invention, air is blown through the one or more slots portions by a pump disposed within the wind turbine.

Alternatively, or in addition, in some embodiments of the present invention, the air is blown through the one or more slots due to the centrifugal force caused by the rotation of the wind turbine blade. In these embodiments, air enters the wind turbine blade at its inboard region. Since the wind turbine is rotating, the air is forced form the inboard region of the wind turbine blade, along the interior of the wind turbine blade and out of the one or more slots due to centrifugal force.

Where centrifugal force is used to blow air through the one or more slots, there may be no need to use a pump. This advantageously reduces the cost of installing and maintaining the lift disrupting device for disrupting airflow over the suction side of the wind turbine blade. Additionally, since the centrifugal force is caused by the rotation of the wind turbine blade, the higher the rotational speed of the wind turbine, the greater the centrifugal force acting on the air being blown through the one or more slots. Consequently, at higher rotational speeds, the air will be blown through the one or more slots at a higher velocity which will disrupt airflow over the suction side of the wind turbine blade to a greater extent. In this way, the lift disrupting device for disrupting airflow over the suction side of the wind turbine blade becomes somewhat self-regulating, increasing the velocity of the blown air when the wind turbine is operating at high rotational speeds and reducing the velocity of the blown air when the wind turbine is operating at low rotational speeds.

In some embodiments of the present invention, activating a lift disrupting device for disrupting airflow over the suction side of the wind turbine blade in response to the generated signal comprises opening a valve within the wind turbine to allow air to flow into the wind turbine blade and out through the one or more slots.

The wind turbine may include a single valve which is able to control the supply of air to a plurality of wind turbine blades. This is advantageous since it requires fewer components and is therefore simpler to manufacture. Alternately, each wind turbine blade may have a separate valve to control the supply of air to each wind turbine blade individually. This may be advantageous where it is desirable to reduce the lift generated by only one of the wind turbine blades, for example if it is determined that only one of the wind turbine blades is will experience negative stall at their outboard region.

### Brief Description of the Drawings

The invention will now be described by way of example only, with reference to the accompanying drawings in which:
Figure 1 illustrates a typical wind turbine;
Figure 2 is a graph showing how the power generated by a typical wind turbine varies with the speed of the on-coming wind;
Figures 3a and 3b illustrate the airflow over a wind turbine blade over a mid-board region of the blade;
Figures 4a and 4b illustrate the airflow over a wind turbine blade over an outboard region of the blade;
Figures 5a and 5b illustrate the airflow over a wind turbine blade over an outboard region of the blade;
Figure 6 illustrates a wind turbine blade according to one aspect of the present invention; and
Figure 7 is a flow diagram illustrating the method for controlling a wind turbine according to one aspect of the present invention.

### Specific Description

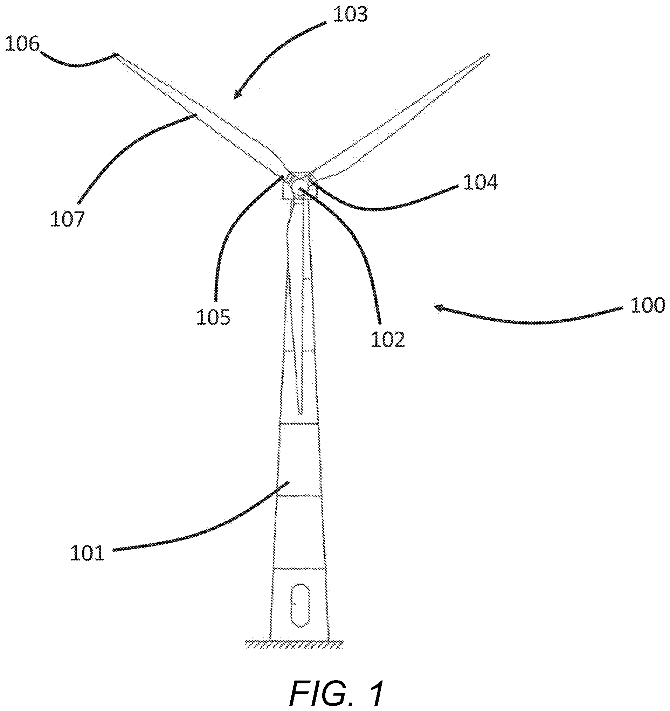

Figure 1 illustrates a horizontal axis wind turbine 100, comprising a tower 101 and a hub 102 mounted on the top of the tower 101. The wind turbine comprises three wind turbine blades 103 which are connected to the hub 102 through pitch bearings 104 enabling the blades 103 to be rotated around their longitudinal axes. The pitch angle of the wind turbine blades 103 can then be controlled by hydraulic actuators, stepper motors or other means for rotating the wind turbine blades 103 around their longitudinal axes. The illustrated wind turbine 100 has three turbine blades 103, but it will be appreciated that the wind turbine could have another number of blades such as one, two, four, five or more. Each wind turbine blade 103 has an inboard region 105 nearest the hub 102 and an opposing outboard region 106. Each wind turbine blade also has a mid-board region 107 disposed between the inboard region 105 and the outboard region 106.

The blades comprise a root end attached to the hub and a tip end at the distal end of the blade. The mid-board region may extend from a spanwise position between 20% to 80% of the blade from the root end to the tip end.

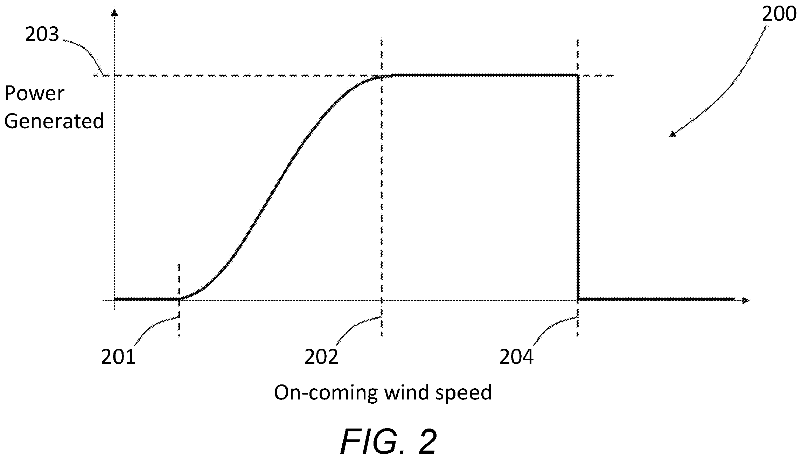

Figure 2 illustrates a power curve 200 for a variable pitch wind turbine plotting wind speed on the x-axis against power on the y-axis. The power curve defines the power output by the wind turbine generator as a function of wind speed. As is well known in the art, the wind turbine starts to generate power at a cut-in wind speed 201. The turbine then operates under part load (also known as partial load) conditions until the rated wind speed is reached at point 202. At the rated wind speed at point 202 the rated (or nominal) generator power 203 is reached. The cut-in wind speed in a typical wind turbine is 3 m/s and the rated wind speed is 12 m/s. At point 204 is the cut-out wind speed, this is the highest wind speed at which the wind turbine may be operated while delivering power. At wind speeds equal to and above the cut-out wind speed the wind turbine is shut down for safety reasons, in particular to reduce the loads acting on the wind turbine.

Between the rated wind speed 202 and the cut-out wind speed 204 is the full load region. In this full load region, the speed of the rotor is controlled by pitching the blades to change the aerodynamic angle of attack as is well known in the art. In particular, the rotor blades are pitched around their longitudinal axes which changes the aerodynamic angle of attack of the blades so that the angle of attack is reduced to a smaller angle to reduce the aerodynamic loads on the blades. By adjusting the pitch angle of the blades towards the feathered position the power can be controlled in the full load region between points 202 and 204.

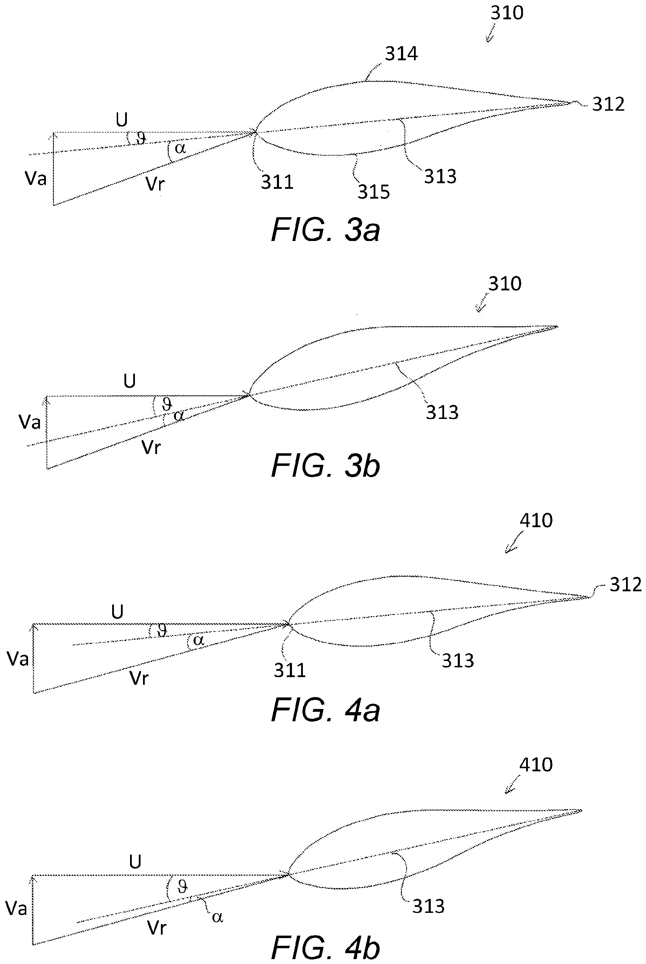

Figure 3a is an illustration of an airfoil profile 310 of the wind turbine blade 103 in the mid-board region 107. The wind turbine blade 103 includes a leading edge 311 and a trailing edge 312. A chord line 313 connects the leading edge 311 and a trailing edge 312, this line is extended beyond the leading edge of the wind turbine blade 310 to demonstrate the angle of attack. The wind turbine blade 310 further includes a suction side 314 and a pressure side 315.

The airfoil profile 310 is set at an angle ϑ with respect to the rotor plane of rotation. The axial free stream velocity Va and the tangential speed u of the blade at the radius of the airfoil profile 310 combine to form a resultant flow velocity Vr. A local aerodynamic angle of attack α is formed between the chord line 313 and the resultant flow velocity Vr. The angle of attack α is positive in the illustration shown in Figure 3a. The axial free stream velocity Va is the oncoming wind speed and is orientated generally parallel to the rotational axis of the rotor.

As noted above, in the full load region (between points 202 and 204 in Figure 2) power control is achieved by pitching of the blade. As shown in Figure 3b, the pitch angle ϑ of the blade 103 has been increased toward feather so as to reduce the angle of attack α. This will reduce the aerodynamic loads acting on the blade. When the blade is feathered the blade is turned so that the chord line is parallel to the resultant flow.

Figure 4a shows an airfoil profile 410 in the outboard region 106 of the blade 103. Here the axial free stream velocity Va is the same as at the mid-board region 107 but the tangential speed u is higher. Referring to Figure 4b, when the blade is pitched toward feather the angle of attack α is reduced and due to the increased tangential speed of the blade at the outboard region the angle of attack can become very small as shown.

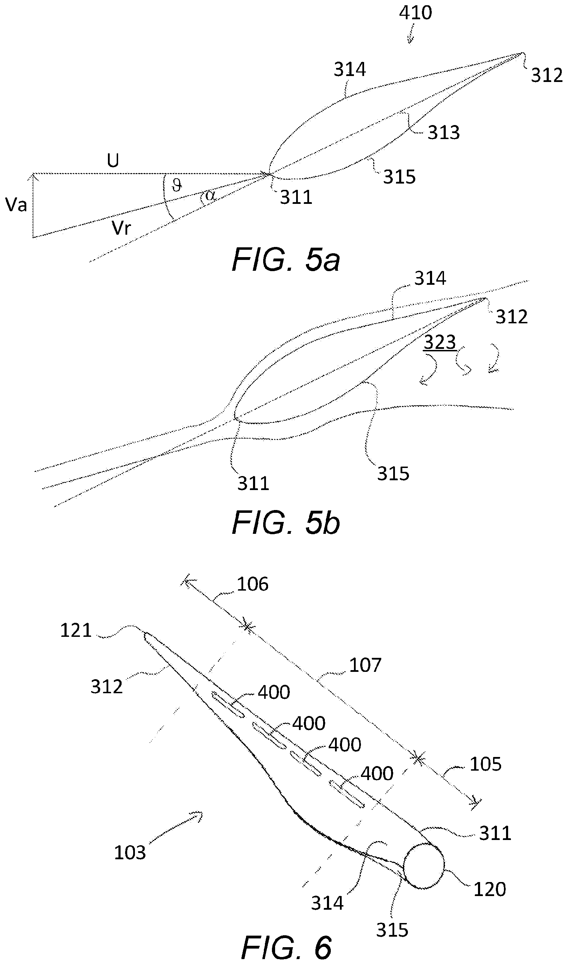

Figure 5a shows the airfoil profile 410 in the outboard region 106 of the blade 103. In this Figure 5a the pitch angle ϑ has been increased to such an extent that the angle of attack α has become negative, such that the resultant flow velocity Vr is above the chord line 313 and the suction side 314 is exposed to the resultant wind. This situation may occur when the pitch angle of the blade has to be increased by a significant extent to reduce the loads acting on the blade.

Figure 5b shows the airfoil profile 410 in the outboard region 106 of the blade 103 at the same angle of attack α as that of Figure 5b, but with streamlines illustrated about the blade profile. As can be seen in this illustration at this negative angle of attack the flow stays attached to the suction side 314 of the blade. However, the flow separates away from the pressure side 315 of the blade 315 leading to a flow separation region 323. When the flow separates from the pressure side the local blade region experiences negative stall. The negative stall can lead to turbulence, noise and stability problems which can result in increased loads on the blade. Wind turbine blades are twisted along the longitudinal axes, but the twist may not be sufficient to avoid the negative stall situation.

Figure 6 illustrates an example of the wind turbine blade 103 which is configured to avoid the negative stall situation. The wind turbine blade 103 extends between a root 120 and a tip 121. As noted above there is an inboard region 105 which extends along 20% of the blade from the root 120 towards the tip 121. There is also an outboard region which extends along 20% of the blade from tip 121 towards the root 120. There is also mid-board region 106 which extends between the inboard region 105 and the outboard region 106. However, the mid-board region may extend from 30% to 70% of the blade span from the root toward the tip in other examples.

Located in the mid-board region 107 is a lift disrupting device 400 for disrupting airflow over the suction side 314 of the wind turbine blade. In particular, the lift disrupting device 400 for disrupting airflow over the suction side 314 aims to reduce the lift generated by the blade in that mid-board region. As the lift in the mid-board region 107 is reduced the aerodynamic loads generated by the blade are reduced. Reducing the aerodynamic loads on the blade in this way means that the blade does not have to be pitched to reduce loads, or the amount of pitching is reduced. Therefore, in the full load region, if the aerodynamic loads are to be reduced, the lift can be reduced at the mid-board region 107 of the blade 103 via the lift disrupting device 400 so that the blade does not have to pitch so much to reduce the aerodynamic loads. Therefore, negative stall will be avoided at the outboard region 106 of the blade 103 as the angle of attack will not be forced to a negative value.

To put it another way, lift can be shed in the mid-board region 107 of the blade 103 so that the outboard region 106 does not need to be pitched toward feather to reduce loads; or the amount of pitch toward feather can be reduced.

When the lift disrupting device 400 is activated, the airflow is disrupted over the suction side 314 of the blade 103 in the mid-board region 107. In addition to lift being shed in the mid-board region drag will also be increased in the mid-board region. By reducing lift and increasing drag the aerodynamic damping of the blade is increased which will reduce loads on the blades.

If the lift disrupting device 400 is not present, an increase in wind speed, such as a gust may require the blade to be unloaded by feathering the blade, and the change in pitch angle to feather the blade may be so aggressive that the outboard region of the blade is forced into negative stall. The lift disrupting device in the mid-board region of the blade means that the pitch angle does not have to be changed so aggressively, thus avoiding negative stall at the outboard region of the blade.

An advantage of the invention is that it allows for a reduction in the use of the pitch system and can allow longer blades to be retrofitted to an existing wind turbine. Or, another advantage is that blades can be used in more severe wind conditions (i.e. higher average wind speeds and/or higher turbulence intensity). In a still further advantage, the cut-out wind speed of the turbine can be raised because sometimes the cut-out wind speed is limited by the negative stall phenomenon.

In an example, the lift disrupting device comprises a plurality of slots 400 in the suction side 314 of the blade 103. In use, air is ejected from the slots 400 towards the leading edge 311 which has the effect of shedding lift. The air that is ejected from the slots may be forced out via a pump located in the blade or in the hub. Or, there may be a passive system where air is forced out of the slots 400 due to the centrifugal forces. The slots are disposed in a spanwise direction between about 30 percent and about 70 percent of the length of the wind turbine blade from the root 120 towards the tip 121. In addition, the slots are disposed in a region between about 5 percent and about 70 percent along the chord length of the wind turbine blade from the leading edge 311 towards the trailing edge 312. When the lift disrupting device 400 is activated, air can be blown into the wind turbine blade 103 through the root 120, along the interior of the wind turbine blade 103, and out through the slots and towards the leading edge on the suction side of the wind turbine blade.

In other examples, the lift disrupting device may be a spoiler, or a plurality of spoilers that lie flush with the suction side 314 but rise up when required to shed lift. In a still further example, the lift disrupting device 400 may be a micro-tab or a plurality of micro-tabs which can be actuated to shed lift. Or, the lift disrupting device may be other actuation techniques such as inflatable devices or plasma actuators pointed toward the leading edge.

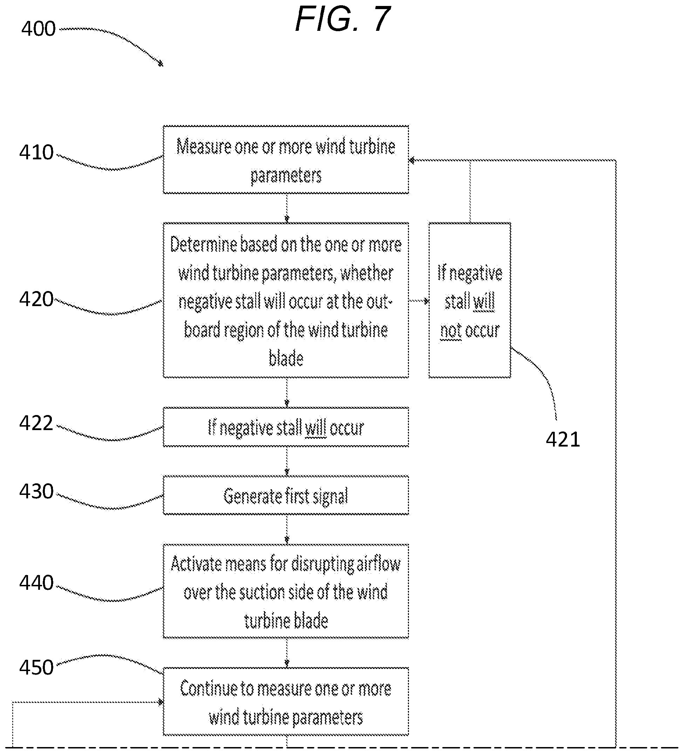

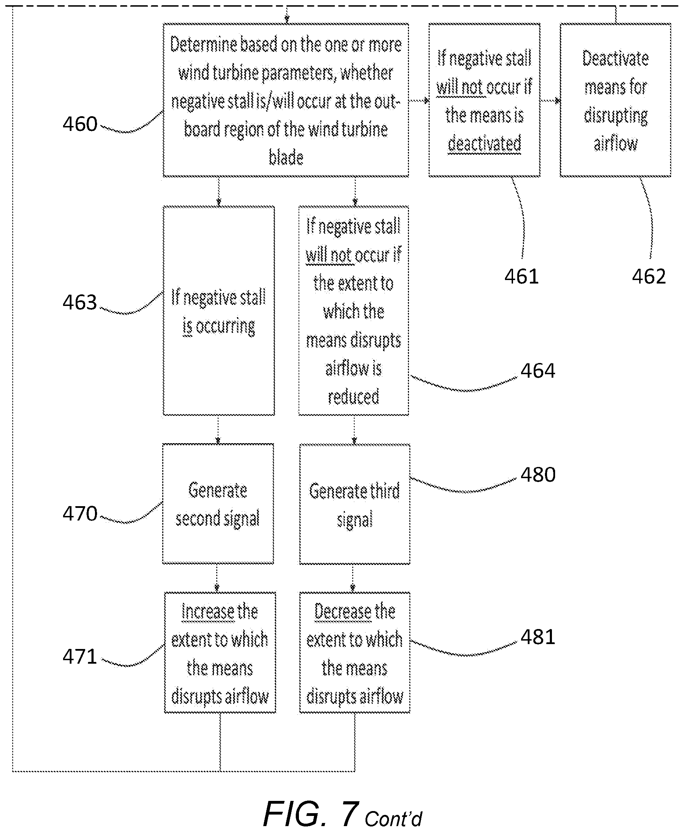

Figure 7 is a flow diagram illustrating a method for controlling a wind turbine according to one aspect of the present invention.

In step 410, one or more wind turbine parameters are measured. In this example, the axial free stream velocity, the rotational speed of the rotor and the pitch angle of the wind turbine blade are measured.

In step 420, the measured one or more wind turbine parameters are used to determine if negative stall will occur at the outboard region of the wind turbine blade. This is done by using the axial free stream velocity, the rotational speed of the rotor and the pitch angle of the wind turbine blade to calculate the angle of attack of the wind turbine blade 103 at the outboard region 106. This angle of attack is then compared against a minimum threshold value at which negative stall is known to occur in the outboard region 107 of the wind turbine blade. If the angle of attack is above the minimum threshold value, then it is determined that negative stall will not occur at the outboard region of the wind turbine blade 103 (step 421). In this case no further action is taken and the one or more wind turbine parameters continue to be measured at step 410. If the angle of attack is below the minimum threshold value, then it is determined at 422 that negative stall will occur at the outboard region 107 of the wind turbine blade.

If it is determined that negative stall will occur, then in step 430, a first signal is generated.

In step 440, the lift disrupting device 400 on the suction side 314 of the wind turbine blade is activated in response to the generated first signal such that the lift generated by the wind turbine blade is reduced. The lift disrupting device 400 is disposed at the mid-board region 107 of the wind turbine blade 103.

In this example, the lift disrupting device 400 comprises a vent portion configured to direct air towards the leading edge of the wind turbine blade. This slows the airflow over the suction side of the wind turbine blade and thereby reduces the lift generated by the wind turbine blade. In addition, the drag over the blade is increased. This prevents negative stall occurring at the outboard region of the wind turbine blade as discussed above. In step 450, the one or more wind parameters continue to be measured. The one or more wind parameters are the same as those measured in step 410.

In step 460, the measured one or more wind turbine parameters are used to determine if negative stall is occurring at the outboard region 106 of the wind turbine blade. The measured one or more wind turbine parameters are also used to determine if negative stall will still occur at the outboard region of the wind turbine blade if the extent to which the lift disrupting device disrupts airflow over the suction side of the wind turbine blade is reduced.

If it is determined at step 461 that negative stall will not occur if the lift disrupting device is deactivated completely, then the lift disrupting device may be deactivated completely at step 462. The one or more wind turbine parameters continue to be measured in case the conditions change.

If it is determined at step 463 that negative stall is occurring at the outboard region of the wind turbine blade, then in step 470, a second signal is generated. In response to the second generated signal, the extent to which the lift disrupting device disrupts airflow over the suction side of the wind turbine blade is increased at step 471. This may be done by adjusting a valve to allow more air to pass into the wind turbine blade and through the plurality of blowing slots. In this way, the lift generated by the wind turbine blade is reduced and negative stall is prevented from occurring at the outboard region of the wind turbine blade. The one or more wind turbine parameters continue to be monitored in case the conditions change.

If, at step 464, it is determined that negative stall will not occur at the outboard region of the wind turbine blade if the extent to which the lift disrupting device disrupts airflow over the suction side of the wind turbine blade is decreased, then at step 480, a third signal is generated. In response to the third signal, the extent to which the lift disrupting device for disrupting airflow disrupts airflow over the suction side of the wind turbine blade is decreased at 481. This increases the lift generated by the wind turbine blade while still preventing negative stall occurring at the outboard region of the wind turbine blade. The one or more wind turbine parameters continue to be monitored in case the conditions change.

A controller will be provided in the wind turbine to carry out the steps of the method as described above.

Described above are a number of embodiments with various optional features. It should be appreciated that, with the exception of any mutually exclusive features, any combination of one or more optional features are possible. In particular, any features that are described in relation to one aspect of the invention are equally applicable to the other aspects of the invention.

## Claims

1. A method for controlling a wind turbine (100), the wind turbine comprising a wind turbine blade (103), the method comprising:
measuring (410) one or more wind turbine parameters;
determining (420), based on the one or more wind turbine parameters, whether negative stall will occur at an outboard region (106) of the wind turbine blade (103);
generating (430) a first signal if it is determined negative stall will occur at the outboard region of the wind turbine blade; and
activating (440) a lift disrupting device (440) for disrupting airflow over the suction side (314) of the wind turbine blade in response to the generated first signal such that the lift generated by the wind turbine blade is reduced;
wherein the lift disrupting device (400) for disrupting airflow over the suction side (314) of the wind turbine blade is disposed at a mid-board region (107) of the wind turbine blade.

2. A method for controlling a wind turbine according to claim 1, wherein the wind turbine blade (103) is a variable pitch wind turbine blade and the one or more wind turbine parameters include the pitch angle of the wind turbine blade.

3. A method for controlling a wind turbine according to claim 1 or claim 2, the method further comprising reducing the lift generated by the wind turbine blade (103) by pitching the blade towards feather wherein,
the pitch angle of the wind turbine blade is not changed to such an extent that negative stall occurs at the outboard region (106) of the wind turbine blade.

4. A method for controlling a wind turbine according to claims 1, 2 or 3, wherein the one or more wind turbine parameters include at least one of: axial free stream velocity, on-coming wind direction, turbine torque, turbine thrust, power output, frequency of rotation, stress at the outboard region of the wind turbine blade, strain at the outboard region of the wind turbine blade and air pressure on either the pressure (315) or the suction (314) side of the wind turbine blade at the outboard region (106) of the wind turbine blade.

5. A method for controlling a wind turbine according to any preceding claim, wherein determining whether negative stall will occur at the outboard region (106) of the wind turbine blade involves comparing the one or more wind turbine parameters against a threshold value for that parameter beyond which negative stall at the outboard region of the wind turbine blade is known to occur.

6. A method for controlling a wind turbine according to according to any of claims 1 to 4, wherein determining whether negative stall will occur at the outboard region (106) of the wind turbine blade involves;
calculating an angle of attack of the outboard region of the wind turbine blade based on the one or more wind turbine parameters, and
comparing the calculated angle of attack of the outboard region of the wind turbine blade with a minimum threshold value angle of attack, below which negative stall is known to occur at the outboard region of the wind turbine blade.

7. A method for controlling a wind turbine according to any of claims 1 to 4, wherein determining whether negative stall will occur at the outboard region (106) of the wind turbine blade involves inputting the one or more parameters into a real-time computer model of the wind turbine which can determine whether negative stall will occur.

8. A method for controlling a wind turbine according to any preceding claim, the method further comprising:
continuing to measure (450) one or more wind turbine parameters once the lift disrupting device (400) for disrupting airflow over the suction side (314) of the wind turbine blade (103) has been activated,
determining (460), based on the one or more wind turbine parameters, whether negative stall is occurring at the outboard region of the wind turbine blade,
generating a second signal (470) if it is determined negative stall is occurring at the outboard region of the wind turbine blade, and
increasing the extent to which the lift disrupting device (400) for disrupting airflow, disrupts airflow over the suction side of the wind turbine blade in response to the generated second signal such that the lift generated by the wind turbine blade is reduced.

9. A method for controlling a wind turbine according to any preceding claim, the method further comprising:
continuing to measure (450) one or more wind turbine parameters once the lift disrupting device (400) for disrupting airflow over the suction side (314) of the wind turbine blade has been activated,
determining (460), based on the one or more wind turbine parameters, whether negative stall will occur at the outboard region (106) of the wind turbine blade,
generating a third signal (480) if it is determined negative stall will no longer occur at the outboard region of the wind turbine blade, and
decreasing the extent to which the lift disrupting device (400) disrupts airflow over the suction side of the wind turbine blade in response to the generated third signal such that negative stall does not occur at the outboard region of the wind turbine blade.

10. A method for controlling a wind turbine according to claim 8 or claim 9, the method further comprising deactivating (462) the lift disrupting device (400) for disrupting airflow over the suction side of the wind turbine blade if it is determined that, based on the one or more wind turbine parameters, negative stall will no longer occur at the outboard region of the wind turbine blade if the lift disrupting device for disrupting airflow over the suction side of the wind turbine blade is deactivated.

11. A method for controlling a wind turbine according to any preceding claim, wherein the mid-board region (107) is disposed from 20% to 80% along the length of the wind turbine blade (103) from a root of the blade towards a tip of the blade.

12. A method for controlling a wind turbine according to any preceding claim, wherein the lift disrupting device (400) for disrupting airflow over the suction side of the wind turbine comprises one or more slots located on the suction side at the mid-board region of the wind turbine blade and air is blown through the slots towards a leading edge and/or retractable tabs, spoilers or flaps which project from the suction side at the mid-board region of the wind turbine blade to disrupt airflow.

## Patentansprüche

1. Verfahren zum Steuern einer Windkraftanlage (100), wobei die Windkraftanlage ein Windkraftanlagenblatt (103) umfasst, wobei das Verfahren Folgendes umfasst:
Messen (410) von einem oder mehreren Windkraftanlagenparametern;
Bestimmen (420), basierend auf dem einen oder den mehreren Windkraftanlagenparametern, ob ein negativer Strömungsabriss in einem Außenbereich (106) des Windkraftanlagenblatts (103) auftreten wird;
Generieren (430) eines ersten Signals, falls bestimmt worden ist, dass ein negativer Strömungsabriss im Außenbereich des Windkraftanlagenblatts auftreten wird; und
Aktivieren (440) einer Auftriebsunterbrechungseinheit (440) zum Unterbrechen einer Luftströmung über der Saugseite (314) des Windkraftanlagenblatts als Reaktion auf das generierte erste Signal, sodass der durch das Windkraftanlagenblatt generierte Auftrieb reduziert wird;
wobei die Auftriebsunterbrechungseinheit (400) zum Unterbrechen der Luftströmung über der Saugseite (314) des Windkraftanlagenblatts in einem Mittelbereich (107) des Windkraftanlagenblatts angeordnet ist.

2. Verfahren zum Steuern einer Windkraftanlage nach Anspruch 1, wobei das Windkraftanlagenblatt (103) ein winkelverstellbares Windkraftanlagenblatt ist und der eine oder die mehreren Windkraftanlagenparameter den Blattwinkel des Windkraftanlagenblatts beinhalten.

3. Verfahren zum Steuern einer Windkraftanlage nach Anspruch 1 oder Anspruch 2, wobei das Verfahren weiter das Reduzieren des durch das Windkraftanlagenblatt (103) generierten Auftriebs durch Abwinkeln des Blatts in Segelstellung umfasst, wobei
der Blattwinkel des Windkraftanlagenblatts nicht in einem solchen Ausmaß verändert wird, dass ein negativer Strömungsabriss im Außenbereich (106) des Windkraftanlagenblatts auftritt.

4. Verfahren zum Steuern einer Windkraftanlage nach Ansprüchen 1, 2 oder 3, wobei der eine oder die mehreren Windkraftanlagenparameter mindestens eines der Folgenden beinhalten: eine axiale Grundströmungsgeschwindigkeit, eine entgegenkommende Windrichtung, ein Turbinendrehmoment, eine Turbinenschubkraft, eine Leistungskraft, eine Rotationshäufigkeit, eine mechanische Spannung im Außenbereich des Windkraftanlagenblatts, eine Beanspruchung im Außenbereich des Windkraftanlagenblatts und ein Luftdruck entweder an der Druck- (315) oder der Saugseite (314) des Windkraftanlagenblatts im Außenbereich (106) des Windkraftanlagenblatts.

5. Verfahren zum Steuern einer Windkraftanlage nach einem vorstehenden Anspruch, wobei das Bestimmen, ob ein negativer Strömungsabriss im Außenbereich (106) des Windkraftanlagenblatts auftreten wird, das Vergleichen des einen oder der mehreren Windkraftanlagenparameter mit einem Schwellenwert für diesen Parameter, über den hinaus ein negativer Strömungsabriss im Außenbereich des Windkraftanlagenblatts bekanntermaßen auftritt, involviert.

6. Verfahren zum Steuern einer Windkraftanlage nach einem der Ansprüche 1 bis 4, wobei das Bestimmen, ob ein negativer Strömungsabriss im Außenbereich (106) des Windkraftanlagenblatts auftreten wird, Folgendes involviert;
Berechnen eines Anstellwinkels des Außenbereichs des Windkraftanlagenblatts basierend auf dem einen oder den mehreren Windkraftanlagenparametern, und
Vergleichen des berechneten Anstellwinkels des Außenbereichs des Windkraftanlagenblatts mit einem Mindestschwellenwert des Anstellwinkels, unterhalb welchem ein negativer Strömungsabriss im Außenbereich des Windkraftanlagenblatts bekanntermaßen auftritt.

7. Verfahren zum Steuern einer Windkraftanlage nach einem der Ansprüche 1 bis 4, wobei das Bestimmen, ob ein negativer Strömungsabriss im Außenbereich (106) des Windkraftanlagenblatts auftreten wird, eine Eingabe des einen oder der mehreren Parameter in ein Echtzeit-Computermodell der Windkraftanlage, das bestimmen kann, ob ein negativer Strömungsabriss auftreten wird, involviert.

8. Verfahren zum Steuern einer Windkraftanlage nach einem vorstehenden Anspruch, wobei das Verfahren weiter Folgendes umfasst:
Fortfahren mit dem Messen (450) eines oder mehrerer Windkraftanlagenparameter, sobald die Auftriebsunterbrechungseinheit (400) zum Unterbrechen der Luftströmung über der Saugseite (314) des Windkraftanlagenblatts (103) aktiviert worden ist,
Bestimmen (460), basierend auf dem einen oder den mehreren Windkraftanlagenparametern, ob ein negativer Strömungsabriss im Außenbereich des Windkraftanlagenblatts auftritt,
Generieren eines zweiten Signals (470), falls bestimmt wird, dass ein negativer Strömungsabriss im Außenbereich des Windkraftanlagenblatts auftritt, und
Erhöhen des Ausmaßes, bis zu welchem die Auftriebsunterbrechungseinheit (400) zum Unterbrechen der Luftströmung die Luftströmung über der Saugseite des Windkraftanlagenblatts unterbricht, als Reaktion auf das generierte zweite Signal, sodass der durch das Windkraftanlagenblatt generierte Auftrieb reduziert wird.

9. Verfahren zum Steuern einer Windkraftanlage nach einem vorstehenden Anspruch, wobei das Verfahren weiter Folgendes umfasst:
Fortfahren mit dem Messen (450) eines oder der mehrerer Windkraftanlagenparameter, sobald die Auftriebsunterbrechungseinheit (400) zum Unterbrechen der Luftströmung über der Saugseite (314) des Windkraftanlagenblatts (103) aktiviert worden ist,
Bestimmen (460), basierend auf dem einen oder den mehreren Windkraftanlagenparametern, ob ein negativer Strömungsabriss im Außenbereich (106) des Windkraftanlagenblatts auftreten wird,
Generieren eines dritten Signals (480), falls bestimmt wird, dass ein negativer Strömungsabriss im Außenbereich des Windkraftanlagenblatts nicht mehr auftreten wird, und
Reduzieren des Ausmaßes, bis zu welchem die Auftriebsunterbrechungseinheit (400) die Luftströmung über der Saugseite des Windkraftanlagenblatts unterbricht, als Reaktion auf das generierte dritte Signal, sodass kein negativer Strömungsabriss im Außenbereich des Windkraftanlagenblatts auftritt.

10. Verfahren zum Steuern einer Windkraftanlage nach Anspruch 8 oder Anspruch 9, wobei das Verfahren weiter das Deaktivieren (462) der Auftriebsunterbrechungseinheit (400) zum Unterbrechen der Luftströmung über der Saugseite des Windkraftanlagenblatts umfasst, falls bestimmt wird, dass basierend auf dem einen oder den mehreren Windkraftanlagenparametern ein negativer Strömungsabriss im Außenbereich des Windkraftanlagenblatts nicht mehr auftreten wird, falls die Auftriebsunterbrechungseinheit zum Unterbrechen der Luftströmung über der Saugseite des Windkraftanlagenblatts deaktiviert wird.

11. Verfahren zum Steuern einer Windkraftanlage nach einem vorstehenden Anspruch, wobei der Mittelbereich (107) zwischen 20% bis 80% entlang der Länge des Windkraftanlagenblatts (103) von einer Blattwurzel bis zu einer Blattspitze angeordnet ist.

12. Verfahren zum Steuern einer Windkraftanlage nach einem vorstehenden Anspruch, wobei die Auftriebsunterbrechungseinheit (400) zum Unterbrechen der Luftströmung über der Saugseite der Windkraftanlage einen oder mehrere Schlitze umfasst, die sich an der Saugseite im Mittelbereich des Windkraftanlagenblatts befinden und Luft durch die Schlitze in Richtung einer Blattvorderkante und/oder einziehbaren Klappen, Spoilern oder Rudern geblasen wird, die von der Saugseite im Mittelbereich des Windkraftanlagenblatts hervorstehen, um die Luftströmung zu unterbrechen.

## Revendications

1. Procédé de commande d'une éolienne (100), l'éolienne comprenant une pale d'éolienne (103), le procédé comprenant :
une mesure (410) d'un ou plusieurs paramètres d'éolienne ;
le fait de déterminer (420), sur la base des un ou plusieurs paramètres d'éolienne, si un décrochage aérodynamique négatif se produira au niveau d'une région extérieure (106) de la pale d'éolienne (103) ;
une génération (430) d'un premier signal s'il est déterminé qu'un décrochage aérodynamique négatif se produira au niveau de la région extérieure de la pale d'éolienne ; et
une activation (440) d'un dispositif d'interruption de portance (440) permettant d'interrompre un écoulement d'air sur la face sous le vent (314) de la pale d'éolienne en réponse au premier signal généré de sorte que la portance générée par la pale d'éolienne soit réduite ;
dans lequel le dispositif d'interruption de portance (400) permettant d'interrompre un écoulement d'air sur la face sous le vent (314) de la pale d'éolienne est disposé au niveau d'une région intermédiaire (107) de la pale d'éolienne.

2. Procédé de commande d'une éolienne selon la revendication 1, dans lequel la pale d'éolienne (103) est une pale d'éolienne à calage variable et les un ou plusieurs paramètres d'éolienne incluent l'angle de calage de la pale d'éolienne.

3. Procédé de commande d'une éolienne selon la revendication 1 ou la revendication 2, le procédé comprenant en outre une réduction de la portance générée par la pale d'éolienne (103) en calant la pale vers la mise en drapeau, dans lequel,
l'angle de calage de la pale d'éolienne n'est pas changé au point qu'un décrochage aérodynamique négatif se produise au niveau de la région extérieure (106) de la pale d'éolienne.

4. Procédé de commande d'une éolienne selon les revendications 1, 2 ou 3, dans lequel les un ou plusieurs paramètres d'éolienne incluent au moins un de : une vitesse d'écoulement non perturbé axial, une direction de vent entrant, un couple de turbine, une poussée de turbine, une sortie de puissance, une fréquence de rotation, une contrainte au niveau de la région extérieure de la pale d'éolienne, un effort au niveau de la région extérieure de la pale d'éolienne et une pression d'air sur la face au vent (315) ou sous le vent (314) de la pale d'éolienne au niveau de la région extérieure (106) de la pale d'éolienne.

5. Procédé de commande d'une éolienne selon une quelconque revendication précédente, dans lequel le fait de déterminer si un décrochage aérodynamique négatif se produira au niveau de la région extérieure (106) de la pale d'éolienne implique une comparaison des un ou plusieurs paramètres d'éolienne à une valeur de seuil pour ce paramètre au-delà de laquelle un décrochage négatif au niveau de la région extérieure de la pale d'éolienne est connu pour se produire.

6. Procédé de commande d'une éolienne selon l'une quelconque des revendications 1 à 4, dans lequel le fait de déterminer si un décrochage aérodynamique négatif se produira au niveau de la région extérieure (106) de la pale d'éolienne implique ;
un calcul d'un angle d'attaque de la région extérieure de la pale d'éolienne sur la base des un ou plusieurs paramètres d'éolienne, et
une comparaison de l'angle d'attaque calculé de la région extérieure de la pale d'éolienne à une valeur de seuil minimale d'angle d'attaque, en dessous de laquelle un décrochage aérodynamique négatif est connu pour se produire au niveau de la région extérieure de la pale d'éolienne.

7. Procédé de commande d'une éolienne selon l'une quelconque des revendications 1 à 4, dans lequel le fait de déterminer si un décrochage aérodynamique négatif se produira au niveau de la région extérieure (106) de la pale d'éolienne implique une entrée des un ou plusieurs paramètres dans un modèle informatique en temps réel de l'éolienne qui peut déterminer si un décrochage aérodynamique négatif se produira.

8. Procédé de commande d'une éolienne selon une quelconque revendication précédente, le procédé comprenant en outre :
une poursuite de la mesure (450) d'un ou plusieurs paramètres d'éolienne une fois que le dispositif d'interruption de portance (400) permettant d'interrompre un écoulement d'air sur la face sous le vent (314) de la pale d'éolienne (103) a été activé,
le fait de déterminer (460), sur la base des un ou plusieurs paramètres d'éolienne, si un décrochage aérodynamique négatif est en train de se produire au niveau de la région extérieure de la pale d'éolienne,
une génération d'un deuxième signal (470) s'il est déterminé qu'un décrochage aérodynamique négatif est en train de se produire au niveau de la région extérieure de la pale d'éolienne, et
une augmentation de l'ampleur à laquelle le dispositif d'interruption de portance (400) permettant d'interrompre un écoulement d'air interrompt un écoulement d'air sur la face sous le vent de la pale d'éolienne en réponse au deuxième signal généré de sorte que la portance générée par la pale d'éolienne soit réduite.

9. Procédé de commande d'une éolienne selon une quelconque revendication précédente, le procédé comprenant en outre :
une poursuite de la mesure (450) d'un ou plusieurs paramètres d'éolienne une fois que le dispositif d'interruption de portance (400) permettant d'interrompre un écoulement d'air sur la face sous le vent (314) de la pale d'éolienne a été activé,
le fait de déterminer (460), sur la base des un ou plusieurs paramètres d'éolienne, si un décrochage aérodynamique négatif se produira au niveau de la région extérieure (106) de la pale d'éolienne,
une génération d'un troisième signal (480) s'il est déterminé qu'un décrochage aérodynamique négatif ne se produira plus au niveau de la région extérieure de la pale d'éolienne, et
une diminution de l'ampleur à laquelle le dispositif d'interruption de portance (400) interrompt un écoulement d'air sur la face sous le vent de la pale d'éolienne en réponse au troisième signal généré de sorte qu'un décrochage aérodynamique négatif ne se produise pas au niveau de la région extérieure de la pale d'éolienne.

10. Procédé de commande d'une éolienne selon la revendication 8 ou la revendication 9, le procédé comprenant en outre une désactivation (462) du dispositif d'interruption de portance (400) permettant d'interrompre un écoulement d'air sur la face sous le vent de la pale d'éolienne s'il est déterminé que, sur la base des un ou plusieurs paramètres d'éolienne, un décrochage aérodynamique négatif ne se produira plus au niveau de la région extérieure de la pale d'éolienne si le dispositif d'interruption de portance permettant d'interrompre un écoulement d'air sur la face sous le vent de la pale d'éolienne est désactivé.

11. Procédé de commande d'une éolienne selon une quelconque revendication précédente, dans lequel la région intermédiaire (107) est disposée de 20 % à 80 % le long de la longueur de la pale d'éolienne (103) depuis un pied de la pale vers un bout de la pale.

12. Procédé de commande d'une éolienne selon une quelconque revendication précédente, dans lequel le dispositif d'interruption de portance (400) permettant d'interrompre un écoulement d'air sur la face sous le vent de l'éolienne comprend une ou plusieurs fentes situées sur la face sous le vent au niveau de la région intermédiaire de la pale d'éolienne et de l'air est soufflé à travers les fentes vers un bord d'attaque et/ou des compensateurs rétractables, des déporteurs ou des volets qui font saillie à partir de la face sous le vent au niveau de la région intermédiaire de la pale d'éolienne pour interrompre un écoulement d'air.
